Europäisches Patentamt

**European Patent Office**

Office européen des brevets

(11) Publication number: **0 152 666**
**B1**

(12) **EUROPEAN PATENT SPECIFICATION**

(45) Date of publication of patent specification: **26.08.87**

(21) Application number: **84303634.4**

(22) Date of filing: **30.05.84**

(51) Int. Cl.⁴: **C 02 F 1/52**

(54) Method and apparatus for the clarification of sewage and other wastes.

| | |
|---|---|
| (30) Priority: **03.02.84 CA 446760** | (73) Proprietor: **CONTINENTAL MANUFACTURING & SALES INC.**<br>**149 Jessop Avenue**<br>**Saskatoon Saskatchewan S7N 1Y3 (CA)** |
| (43) Date of publication of application:<br>**28.08.85 Bulletin 85/35** | |
| (45) Publication of the grant of the patent:<br>**26.08.87 Bulletin 87/35** | (72) Inventor: **Pohoreski, Anton P.**<br>**149 Jessop Avenue**<br>**Saskatoon, SK S7N 1Y3 (CA)** |
| (84) Designated Contracting States:<br>**AT BE CH DE FR GB IT LI LU NL SE** | (74) Representative: **Hartley, David et al**<br>**c/o Withers & Rogers 4 Dyer's Buildings Holborn**<br>**London, EC1N 2JT (GB)** |
| (56) References cited:<br>**EP-A-0 010 337**<br>**AU-D-7 365 181**<br>**CH-A- 206 186**<br>**DE-C- 740 444**<br>**FR-A-2 484 272**<br>**GB-A- 407 807**<br>**GB-A-1 346 596**<br>**GB-A-2 117 751**<br>**US-A-3 482 695**<br>**US-A-4 309 291** | |

Courier Press, Leamington Spa, England.

## Description

Technical field to which the invention relates

The present invention relates to a purification system for impure water such as sewage including a pump for drawing sewage into the system, injection inlets for injecting selected chemicals into the sewage for mixing the chemicals with the sewage in a mixing chamber, a separator chamber for separating sludge therefrom and withdrawing it from the bottom thereof, through a sludge withdrawal line and for withdrawing clean water therefrom through a clean water withdrawal line, and a sludge recycle line interconnecting the separator chamber and the pump inlet line; to a separator chamber forming part of such system including a main cylindrical chamber inlet thereinto, a sludge reservoir at the base thereof, means for removing sludge from the bottom thereof, and means for removing fresh clean water therefrom; and to a method for the purification of sewage comprising circulating sewage through an inlet zone, a mixing zone where it is mixed with selected chemicals, a separating zone where sludge is separated from clean water, and a recycle zone where some sludge is recycled to the mixing zone.

Relevent background art

Conventionally, sewage is first pretreated in lagoons to settle out solids and it then passes through first and second filtering tanks or the like which attempt to remove retaining solids.

The effluent is then allowed to pass to the disposal outlets which may be rivers, streams or the like. Unfortunately, this effluent still contains a relatively large quantity of impurities, the method is time consuming and relatively large land areas are required for the lagoons.

It is also well known in the art that the addition of certain chemicals, such as lime and soda ash, to water having undesirable solids dissolved therein has the effect of causing the dissolved solids to precipitate and form a suspension or slurry, with the water. It is further known that to add raw water and chemicals to a slurry formed as above results in improved and accelerated coagulation and purification of the water. The solids which precipitate from the raw water tend to deposit by accretion on the particles present in the slurry, forming relatively stable particles which are readily separable from the clear, purified water.

It is also well-known that color, turbidity, organic matter and similar impurities may be removed from water by coagulants, e.g. alum, ferric sulphate or the like. These compounds are acidic and react with the alkalinity in the water or with alkaline compounds, e.g. lime or soda ash, to form voluminous insoluble precipitates (hydrates). The precipitates have a tremendous surface area on which the dissolved or colloidally dispersed impurities are absorbed. The suspended impurities are surrounded by the gelatinous hydrates and become part of the precipitate.

Usually a coagulant e.g. alum, sodium aluminate or ferric sulfate is added in the treatment to assist in the separation of the turbidity and precipitates formed from the water. If sterilization and reduction in organic matter are required, chlorine is also used in the treatment.

Domestic or sanitary sewage and industrial wastes may be purified by the chemical precipitation process, in which suitable chemicals (e.g. aluminium sulphate, lime, iron chloride, polyelectrolytes or combinations thereof) are added to the sewage and the sewage passed to one or more flocculating tanks — normally equipped with slowly rotating agitators or paddles — in which colloidal solids are formed into particles of size and weight that will settle. The colloidal solids or flocs are then separated from the liquid by being allowed to settle in subsequent settling tanks, whereafter the purified water is collected in a weir structure mounted at the surface of the water, while the sediment, consisting of flocs and sludge, is removed, normally by means of sludge scrapers and/or pumps. Certain industrial wastes or sewage has inherent flocculating tendencies, and thus it is unnecessary with such effluents to add flocculating chemicals since corresponding purifying effects can be obtained solely by agitating the liquid and allowing the resulting floc to settle.

Amongst the various patents which relate to procedures for the clarification of sewage are the following:

1) AU—A—73651/81 discloses a process for treating raw water with a coagulant and a flocculant. The flocculant may be an anionic, non-ionic or cationic polyelectrolyte and is dosed into the water in amounts of several parts per million.

2) CA—A—662,102 issued April 30, 1963 to The Dow Chemical Company, which teaches the concept of providing a rapidly settling floc from water treated with a coagulant, e.g. alum, by incorporating a water soluble acrylamide polymer in the water;

3) CA—A—662,534 issued May 7, 1963 to American Cyanamid, which teaches the removal of suspended solids for sewage, etc. the suspended solids being formed by the use of an inorganic floc-forming material, e.g. alum, by the addition of an organic polyelectrolyte, e.g. an acrylic or methacrylic and derivative;

4) CA—A—695,871 issued October 13, 1964 to Union Carbide, which teaches floculation in sewage, using organic water soluble linear polymers containing cationic water solubilizing radicals, e.g. an acrylate/acrylamide copolymer;

5) CA—A—720,878 issued November 2, 1965 to D. S. Blaisdell, et al, which provides compositions for treating sewage, the composition comprising a mixture of a cationic polymer, e.g. a hydrophilic synthetic organic cationic polyelectrolyte flocculating material and a weighting agent, e.g. bentonite;

6) CA—A—724,705 issued December 28, 1965 to General Services Company, which teaches the removal of detergent wastes from sewage by the use of a coagulant, e.g. alum or ferric sulphate, and a polyelectrolyte or conditioning agent, e.g. polysaccharides or polyacrylamides and then filtering through an activated carbon bed;

7) CA—A—773,154 issued December 5, 1967 to Neptune Microfloc, which teaches the purification of sewage using a coagulant and a polyelectrolyte and then passing through a bed of granular material of gradually decreasing size.

8) CA—A—880,600 issued September 7, 1971 to Allied Chemical Corporation, which teaches the removal of phosphates from waste water by precipitation with alum and a cationic or anionic wax dispersion;

9) CA—A—959,586 issued December 17, 1974 to Tatabanyal, which teaches a procedure for the purification of sewage using an aluminium salt and bentonite and an acrylic acid/acrylic amide polymer.

Assessment of the background art

None of the above prior art provides a water clarification system which is appropriate for use in small community water systems, resort areas or construction and lumber camps located in remote areas, which is easily maintained and operated by unskilled individuals which can accommodate flows from about 900 to 18,000 litres per hour, which can operate on a continuous daily basis, and which may be readily moved from one area to another depending upon needs.

Disclosure of the invention as claimed

According to one aspect of the invention we provide a method for the clarification of impure water comprising intimately mixing 10—200 parts per million (ppm) of a coagulant with the impure water to provide pre-treated impure water, intimately mixing a cationic polyelectrolyte in an amount of 0.1—5 ppm, with said pre-treated impure water to provide interim pre-treated impure water, intimately mixing an anionic surface active agent in an amount of 0.1—5 ppm, said said interim pre-treated impure water to provide chemically treated impure water, allowing said chemically treated impure water to separate in a separating zone to provide clean water and sludge, separately removing said clean water and said sludge from said separating zone, and returning a portion of said sludge to the impure water.

According to another aspect of the invention we provide apparatus for carrying out the above method comprising pumping means having an inlet and an outlet; a mixing chamber assembly comprising at least three spaced-apart interconnected mixing chambers, the mixing chamber assembly having an inlet connected to the outlet of the pumping means and an outlet; a plurality of injection means for sequential injection of a selected chemical into each mixing chamber when that chamber contains impure water; mixing means for intimately mixing each injected chemical with the impure water prior to the injection of a subsequent chemical; a separator having an inlet connected to the outlet of the mixing chamber assembly for separating solids from liquid and including a first outlet means for withdrawing liquid as clean water and a second outlet means, for withdrawing solids as sludge; and a conduit connected to the second outlet means for returning a portion of the withdrawn sludge to the inlet of the pumping means.

The invention as claimed is further characterised by the following subsidiary features:

(A) In the improved sewage purification system:

(i) the baffles in the mixing chamber include inclined baffles extending part way across the conduit to provide a sinusoidal flow therearound and being inclined at an angle towards the normal direction of flow;

(ii) the system includes a sludge holding hopper at the base of the separator chamber;

(iii) the system includes a sludge sweeping member at the base of the separator chamber;

(iv) the system includes a sludge withdrawal line from the holding hopper;

(v) the system includes a valve to control the recycle flow of sludge from the separator to the pump; and

(vi) the system includes a valved connector line between the sewage inlet line and the pump effluent line to provide for recycle from the pump effluent line back to the pump.

(B) In the improved separator chamber:

(i) the inlets comprise bulbous side wall protrusions;

(ii) the inlets feed a directing chamber defined by a double open ended cylinder having depending cylindrical walls and a protruding annular rim by which it is secured to the inside of the separator chamber; and

(iii) the directing chamber provides a continuous downwardly directed outlet door, and a central upwardly directed part.

(C) In the improved sewage purification method:

(i) the high cationic polyelectrolyte is first added continuously at a first area of the mixing zone, and then the anionic surface active compound is added continuously at a different area of the mixing zone;

(ii) the chemically treated sewage is fed downwardly annularly within a cylindrical separating zone;

(iii) the flow rate through the mixing zone is about 20—180 litres/minute;

(iv) the recycle sludge flows at a rate of about 1—20%, preferably about 5—7% of the total flow through the system; and

(v) the pump recycle rate is about 1—20%, preferably about 5—7%, of the total flow rate through the system.

Advantageous effects of the invention

The advantages effected by the present invention are that an improved sewage treating system, a separator chamber, and method are provided which are simple and effective in providing purified water from raw sewage and which is so pure that there is no need for cleaned effluent to pass through conventional first and second filtering tanks.

Description of at least one way of carrying out the invention

One way of carrying out the invention is described in detail below with reference to the drawings which illustrate only one specific embodiment, in which:

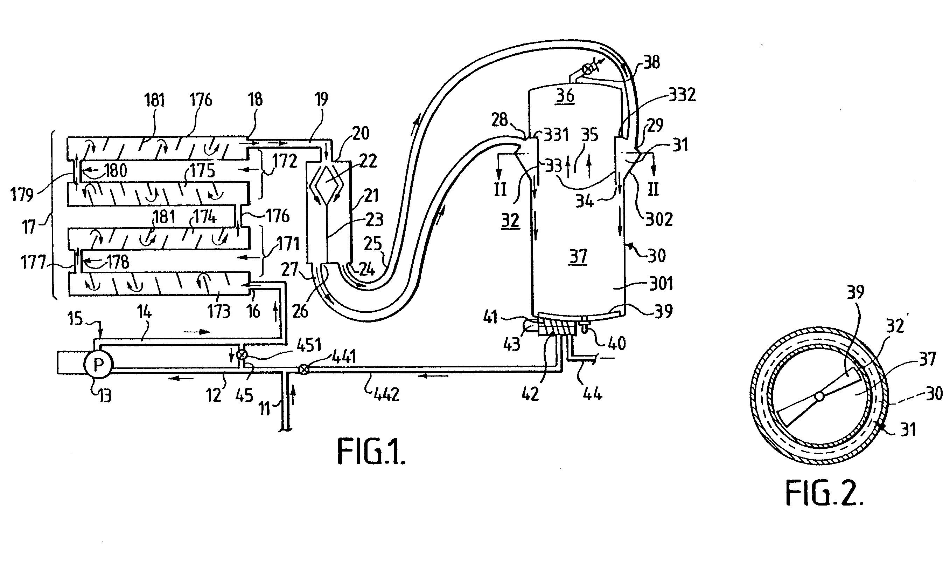

Figure 1 is a schematic representation of the system, and method of sewage treatment of an embodiment of this invention; and

Figure 2 is a section through the line II—II of a separator chamber according to an embodiment of another aspect of this invention.

The sewage treatment system 10 includes a raw sewage inflow line 11 leading to a main flow line 12 connected to the inflow of a pump 13. The outflow line 14 from the pump 13 is provided with an injection means 15 for the introduction of a precipitation chemical, e.g. alum thereinto.

As used herein, alum means a hydrated double sulfate of aluminium and univalent metals, e.g. K, Na, NH$_4$; e.g., K$_2$SO$_4$·Al$_2$ (SO$_4$)$_3$·24H$_2$O; (NH$_4$)$_2$ SO$_4$·Al$_2$(SO$_4$)$_3$·24H$_2$O, KAl(SO$_4$)$_2$·12H$_2$O; or (NH$_4$)$_2$ SO$_4$·Fe$_2$(SO$_4$)$_3$·24H$_2$O. The alum-treated raw sewage enters at one inlet 16 of a mixing chamber 17 and exits at an outlet 18 to be conveyed via line 19 to the inlet 20 of a splitter chamber 20.

Mixing chamber 17 comprises two interconnected U-shaped chambers, namely a first U-shaped chamber 171 and a second U-shaped chamber 172. The inlet 16 is connected to the near arm 173 of the first U-shaped chamber 171, and the outlet 18 is connected to the far arm 176 of the second U-shaped chamber 172. The first U-shaped chamber 171 is connected to the second U-shaped chamber 171 is connected to the second U-shaped chamber 172 by a connecting arm 176.

The near arm 173 of the first U-shaped chamber 171 is connected to the far arm 174 of the first U-shaped chamber 171 by means of a connecting conduit 177, which is provided with an injection means 178 for the injection of treating chemicals thereinto. Similarly the near arm 175 of the second U-shaped chamber 172 is connected to the far arm 176 of the U-shaped chamber 172 by means of a connecting conduit 179, which is in turn provided with an injection means 180 for the injection of treating chemicals thereinto. Each of the four arms 173, 174, 175, 176 is provided with a plurality of staggered baffles 181 inclined towards the direction of flow, to cause the chemically-treated sewage to follow a sinusoidal flow path and thus be thoroughly mixed.

The splitter chamber 21 is a generally cylindrical vessel including an internal diamond-shaped baffle 22 therein to split the chemically-treated sewage flow into two turbulent streams, separated by a vertical imperforate baffle wall 23, to flow out of first outlet 24 to first effluent line 25 and second outlet 26 to second effluent line 27. First effluent line 25 feed the chemically-treated sewage to first inlet 28 of a cylindrical separator chamber 30, while second effluent line 27 feed the chemically-treated sewage to a second, diametrically-opposed inlet 29 of the separator chamber 30.

Separator chamber 30, in the form of a main upright cylinder 301, includes an annular intermediate, bulbous protrusion 302, defining a bulbous-walled directing chamber 31, which is fed by effluent lines 25, 27 through inlets 29, 28 respectively and which is defined by an open ended cylinder 32 having depending cylindrical walls 33 and a securing annular rim 331, by which cylinder 32 is secured to the inner wall of the cylinder 301 at 332. Cylinder 32 provides a continuous, annular, downwardly-directed outlet port 34, and a central, open, upwardly-directed port 35. Outlet port 34 causes the chemically-treated sewage to flow downwardly in an annular flow adjacent the cylindrical side walls of the upright cylinder 301.

The upright cylinder 301 is divided into an upper, clean water holding chamber 36, and a lower, precipitation chamber 37. Clean water flows upwardly through central core of the upright cylinder 301, passes through central port 35 into the upper clean water holding chamber 36, from whence it is withdrawn via central, valved outlet line 38.

The precipitation sludge falls to the bottom of precipitation zone 37 from whence it is scraped by sweep 39, rotatably driven by motor 40 into a sludge-holding hopper 41. The sludge is propelled from the sludge-holding hopper 41 by auger 42 driven by motor 43 into a waste sludge line 44, and into a recycle line 442, valved at 441, leading to main flow line 12. Main flow line 12 is connected to outflow line 14 by pump recycle line 45, valved at 451.

In use, the basic flow pattern is as follows. The raw sewage is drawn by pump 13 through lines 11 and 12 and is pumped to the mixing chamber 17. Before the raw sewage goes to the mixing chamber 17 it is mixed with recycle sludge in line 442, and a recycle mixing flow both to the pump 13 occurs through recycle line 45. The sludge recycle rate is about 1—20%, preferably 5 to 7% of the total flow rate through the system, which varies from about 5—40% gallons/minute. Alum is added to the pump outflow line 14, in an amount of about 10—200 ppm.

In the mixing chamber 17, the chemicals are added to provide the chemically-treated raw sewage. The chemicals are added, preferably continuously, but in the essential sequence as follows: First, added through nozzle 178 is a cationic polyelectrolyte, preferably an acrylamide-based copolymer, typically those known by the Trade Marks HERCOFLOC 855, HERCO-FLOCS 849 or HERCOFLOC 848. Other polyelectrolytes which may be used with varying degrees of success include high molecular weight electrolytes of either natural origin (e.g. proteins or polysacchorides) or of synthetic origin (e.g. alkyl halide addition products of polyvinyl pyridime).

The third essential chemical added through nozzle 180 is an anionic surface active agent, e.g. a polyacrylamide base, e.g. that known by the Trade Mark DOW A 23. Other such polyacrylamide bases which may be used are those known by the Trade Marks DOW A 23P, DOW A 25 and DOW A 27.

The particular construction of the mixing chamber 17 causes intimate treatment of the raw sewage with all the channels.

An important variant in the method is that there is a recycle of pump effluent back to the pump through valve 45. The pump recycle rate is 1—20%, preferably 5—7% of the total flow rate through the system. The intimately mixed chemically treated sewage passes to the splitter chamber 21 and the spit flows go to the separation chamber 30. The sludge settles at the bottom and goes to sludge disposal via line 41, or in amounts of 1—20%, to the sludge recycle line 442, while the clean treated water is withdrawn via outlet line 38.

Industrial application of the invention

The raw sewage is pretreated to induce coagulation, by the sequential use of three different chemical agents, of solids both before entering into, and while within, the mixing zone where these certain chemicals are sequentially mixed with the liquid, preferably through a plurality of injector nozzles. The chemically-treated liquid, e.g., sewage, then eventually flows to the separator chamber. The chemicals and the quantities are used in proper sequence in order to effect the desired results. The chemicals used and the quantities will depend upon design parameters: They co-act to form flocs, crystals and other solids from the dissolved constituents of the sewage being treated, and it is these solids which are removed by the separator chamber. Once treated, the chemical reactions commence and the sludge is converted to a coagulated waste. As the treated effluent passes through the separator chamber, the reacted sludge settles and is removed and the pure water is recovered.

**Claims**

1. Method for the clarification of impure water comprising intimately mixing 10—200 parts per million (ppm) of a coagulant with the impure water to provide pre-treated impure water, intimately mixing a cationic polyelectrolyte in an amount of 0.1—5 ppm, with said pre-treated impure water to provide interim pre-treated impure water, intimately mixing an anionic surface active agent in an amount of 0.1—5 ppm, with said interim pre-treated impure water to provide chemically treated impure water, allowing said chemically treated impure water to separate in a separating zone to provide clean water and sludge, separately removing said clean water and said sludge from said separating zone, and returning a portion of said sludge to the impure water.

2. A method according to Claim 1, wherein the coagulant is alum.

3. The method of Claim 1 or Claim 2 wherein the impure water is flowing at a rate of 20—180 litres/minute, the coagulant, the cationic polyelectrolyte and the anionic surface active agent are each added separately to the flowing stream of impure water, and the sludge is returned to the impure water so that it forms 1—20% of the resulting stream of impure water and sludge.

4. The method of any of Claims 1, 2 or 3 wherein pumping means provides a stream of said impure water and wherein 1—20% of the effluent from the pumping means is returned to the pumping means.

5. Apparatus for carrying out the method of any preceding claim for the treatment of impure water comprising pumping means having an inlet and an outlet; a mixing chamber assembly comprising at least three spaced-apart interconnected mixing chambers, the mixing chamber assembly having an inlet connected to the outlet of the pumping means and an outlet; a plurality of injection means for sequential injection of a selected chemical into each mixing chamber when that chamber contains impure water; mixing means for intimately mixing each injected chemical with the impure water prior to the injection of a subsequent chemical; a separator having an inlet connected to the outlet of the mixing chamber assembly for separating solids from liquid and including a first outlet means for withdrawing liquid as clean water and a second outlet means, for withdrawing solids as sludge; and a conduit connected to the second outlet means for returning a portion of the withdrawn sludge to the inlet of the pumping means.

6. The apparatus of Claim 5 including a conduit interconnected between an inlet line to the inlet of the pumping means and the outlet from said pumping means to provide a pump recycle stream.

**Patentansprüche**

1. Verfahren zur Klärung von Abwasser, bei dem 10—200 Teile pro Million (ppm) eines Koagulierungsmittels innig mit dem Abwasser gemischt werden, um vorbehandeltes Abwasser zu erhalten, bei dem dem vorbehandelten Abwasser weiter 0,1 bis 5 ppm eines kationischen Polyelektrolyts innig zugemischt werden, um aus dem vorbehandelten Abwasser zwischenbehandeltes Abwasser zu erhalten, und bei dem mit dem zwischenbehandelten Abwasser von 0,1 bis 5 ppm eines anionischen oberflächenaktiven Agens innig vermischt wird, um aus dem zwischenbehandelten Abwasser chemisch behandeltes Abwasser zu erhalten, das in einer Trennzone in Frischwasser und Schlamm aufgetrennt wird, wobei das Frischwasser und der Schlamm getrennt von der Trennzone abgezogen werden und ein Teil des Schlammes in das Abwasser rückgeführt wird.

2. Verfahren nach Anspruch 1, dadurch gekennzeichnet, daß das Koagulierungsmittel Alaun ist.

3. Verfahren nach Anspruch 1 oder 2, dadurch gekennzeichnet, daß das Abwasser einen Massenstrom von 20 bis 180 Liter/min. besitzt, das Koagulierungsmittel, der kationische Polyelektrolyt und das anionische oberflächenaktive Agens jeweils separat dem fließenden Strom des Abwassers hinzugegeben werden, und der Schlamm in das Abwasser rückgeführt wird, und zwar in einer Menge von 1 bis 20% des aus Abwasser und Schlamm resultierenden Stroms.

4. Verfahren nach einem der Ansprüche 1, 2 oder 3, dadurch gekennzeichnet, daß eine Pumpeinrichtung die Strömung der Abfallflüssigkeit bewirkt, wobei 1 bis 20% der aus der Pumpeinrichtung ausströmenden Flüssigkeit in die Pumpeinrichtung rückgeführt werden.

5. Vorrichtung zur Durchführung des Verfahrens nach einem der vorhergehenden Ansprüche zur Behandlung von Abwasser, gekennzeichnet durch eine Pumpeinrichtung mit einem Ein- und einem Auslaß, eine Mischkammereinrichtung mit wenigstens drei räumlich getrennten, miteinander verbundenen Mischkammern, wobei die Mischkammereinrichtung einen mit dem Auslaß der Pumpeinrichtung verbundenen Einlaß und einen Auslaß aufweist, eine Vielzahl von Einspritzeinrichtungen zum aufeinanderfolgenden Einspritzen einer bestimmen Chemikalie in jede der Mischkammern, wenn diese Abwasser enthalten, Mischeinrichtungen zur innigen Durchmischung einer jeden eingespritzen Chemikalie mit dem Abwasser vor der erneuten Einspritzung einer weiteren Chemikalie, eine Trennvorrichtung, deren Einlaß mit dem Auslaß der Mischkammereinrichtung verbunden ist, die zur Trennung von Feststoffen aus der Flüssigkeit dient, eine erste Auslaßeinrichtung zum Abziehen der Flüssigkeit als Frischwasser und eine zweite Auslaßeinrichtung zum Abziehen der Feststoffe als Schlamm aufweist, und eine Leitung, die mit der zweiten Auslaßeinrichtung verbunden ist, und über die ein Teil des abgezogenen Schlamms zum Einlaß der Pumpeinrichtung rückgeführt wird.

6. Vorrichtung nach Anspruch 5, gekennzeichnet durch eine Verbindungsleitung zwischen der Zuflußleitung zum Einlaß der Pumpeinrichtung und dem Auslaß der Pumpeinrichtung, mittels der eine Pumprücklaufströmung erzeugt wird.

**Revendications**

1. Procédé de clarification d'eau impure, procédé caractérisé en ce qu'il consiste à mélanger intimement 10 à 200 parties par million (ppm) d'un produit coagulant à l'eau impure pour obtenir de l'eau impure pré-traitée, à mélanger intimement un polyélectrolyte cationique en proportion de 0,1 à 5 ppm à cette eau impure pré-traitée pour obtenir de l'eau impure pré-traitée intermédiaire, à mélanger intimement un agent actif de surface anionique en proportion de 0,1 à 5 ppm à cette eau impure pré-traitée intermédiaire pour obtenir de l'eau impure traitée chimiquement, à laisser cette eau impure traitée chimiquement se séparer dans une zone de séparation pour obtenir de l'eau propre et de la boue, à retirer séparément l'eau propre et la boue de cette zone de séparation, et à renvoyer une partie de la boue dans l'eau impure.

2. Procédé selon la revendication 1, caractérisé en ce que le produit coagulant est de l'alun.

3. Procédé selon l'une quelconque des revendications 1 et 2, caractérisé en ce que l'eau impure coule à un débit de 20 à 180 litres/minute, en ce que le coagulant, le polyélectrolyte cationique et l'agent actif de surface anionique sont ajoutés chacun séparément au débit d'eau impure, et en ce que la boue est renvoyée dans l'eau impure de manière à former de 1 à 20% du débit résultant d'eau impure et de boue.

4. Procédé selon l'une quelconque des revendications 1 à 3, caractérisé en ce que des moyens de pompage fournissent un débit d'eau impure et en ce que de 1 à 20% de l'effluent venant des moyens de pompage est renvoyé aux moyens de pompage.

5. Dispositif de mise en oeuvre du procédé selon l'une quelconque des revendications 1 à 4 pour le traitement d'eau impure, dispositif caractérisé en ce qu'il comprend des moyens munis d'un orifice d'entrée et d'un orifice de sortie; un ensemble de chambres de mélange comprenant au moins trois chambres de mélange séparées reliées ensemble, cet ensemble de chambres de mélange comportant un orifice d'entrée relié à l'orifice de sortie des moyens de pompage, et un orifice de sortie; un certain nombre de moyens d'injection permettant d'injecter séquentiellement un produit chimique choisi dans chaque chambre de mélange, lorsque cette chambre contient de l'eau impure; des moyens de mélange pour mélanger intimement chaque produit chimique injecté à l'eau impure avant l'injection d'un produit chimique suivant; un séparateur muni d'un orifice d'entrée relié à l'orifice de sortie de l'ensemble de chambres de mélange pour séparer les solides du liquide, ce séparateur comprenant des premiers moyens de sortie permettant de retirer le liquide sous forme d'eau propre, et des seconds moyens de sortie permettant de retirer les solides sous forme de boue; et un conduit relié aux seconds moyens de sortie pour ramener à l'entrée des moyens de pompage une partie de la boue extraite.

6. Dispositif selon la revendication 5, caractérisé en ce qu'il comprend une conduite branchée entre une conduite d'entrée conduisant à l'entrée des moyens de pompage, et la sortie de ces moyens de pompage, de manière à fournir un courant de recyclage de pompe.

FIG.1.

FIG.2.

0 152 666